# EUROPÄISCHE PATENTSCHRIFT

(11) **EP 1 035 456 B1**
(45) Veröffentlichungstag und Bekanntmachung des Hinweises auf die Patenterteilung: **23.07.2003**
(21) Anmeldenummer: 00105055.8
(22) Anmeldetag: 09.03.2000
(51) Int. Cl.: G05D 7/06

(54) **Verfahren zur Einstellung eines Ventils**
Method for adjusting a valve
Procédé de réglage d'une soupape

(30) Priorität: 11.03.1999 DE 19910750
(43) Veröffentlichungstag der Anmeldung: 13.09.2000
(73) Patentinhaber: Möhlenhoff, Andreas, 38229 Salzgitter (DE)
(72) Erfinder: Möhlenhoff, Andreas, 38229 Salzgitter (DE); Drescher, Rainer, 31188 Holle (DE)
(74) Vertreter: Döring, Roger, Dipl.-Ing.

(56) Entgegenhaltungen:
- EP-A- 0 462 432
- EP-A- 0 574 637
- EP-A- 0 856 692
- DE-A- 3 140 472
- DE-A- 3 400 057
- FR-A- 2 608 798

## Beschreibung

Die Erfindung betrifft ein Verfahren zur Einstellung eines Ventils, das einen unter der Wirkung einer Ventilfeder stehenden und zwischen zwei Endstellungen in axialer Richtung verstellbaren Stößel aufweist, wobei zur Verstellung des Stößels ein mit einem in seiner Achsrichtung bewegbaren Arbeitskolben ausgerüsteter, temperaturabhängiger Dehnkörper am Ventil befestigt ist, der durch einen an eine Spannungsquelle anschließbaren, elektrischen Widerstand beheizbar ist und dem ein an der Stirnseite des Stößels anliegendes Stellglied zugeordnet ist, auf welches eine Druckfeder einwirkt, welche das Ventil bei nicht beheiztem Widerstand entgegen der Wirkung der Ventilfeder geschlossen hält und welche bei beheiztem, sich ausdehnendem Dehnkörper durch das dabei von demselben bewegte Stellglied zusammengedrückt wird, so daß das Ventil durch die Ventilfeder geöffnet wird.

Ein Ventil mit dieser Ausführung ist aus EP 856 692 bekannt.

Ventile, auf welche sich das Verfahren nach der Erfindung bezieht, werden beispielsweise in der Heizungs- und Lüftungstechnik eingesetzt. Sie können grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Menge eines durch ein entsprechendes Rohrsystem strömenden bzw. fließenden Mediums, verändert werden kann. Ein solches Medium ist beispielsweise Wasser oder Luft. Die strömende oder fließende Menge wird im folgenden als "Durchflußmenge" bezeichnet.

Bei dem durch die DE-C-3 140 472 bekannten Verfahren wird der Stößel eines Ventils durch Einwirkung von elektrischem Strom bewegt. Die entsprechende Vorrichtung ist mit einem temperaturabhängigen Dehnkörper ausgerüstet, an dem ein elektrischer Widerstand als Heizelement angebracht ist. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt. Der Stößel des in Ruhestellung geschlossenen Ventils wird dadurch entlastet und durch eine Ventilfeder in Richtung "Öffnung des Ventils" bewegt. Dieses bekannte Verfahren und die entsprechende Vorrichtung haben sich in der Praxis bewährt. Die von der Stellung des Stößels des Ventils abhängige Durchflußmenge eines Mediums ist aber nicht definiert.

Der Erfindung liegt die Aufgabe zugrunde, ein Verfahren zur Einstellung eines in einem Rohrsystem angeordneten Ventils anzugeben, mit dem eine Aussage über die Durchflußmenge eines durch das Rohrsystem strömenden Mediums gemacht werden kann.

Diese Aufgabe wird mit einem Verfahren der eingangs geschilderten Art gemäß der Erfindung dadurch gelöst,
- daß zwischen dem Widerstand und der Spannungsquelle ein durch einen Mikroprozessor zu betätigender, elektrischer Schalter angeordnet wird,
- daß an den Mikroprozessor eine mit dem Stellglied gekoppelte Meßeinrichtung angeschlossen wird, die von der Position des Stellgliedes abhängige elektrische Spannungswerte an den Mikroprozessor liefert, aus denen vom Mikroprozessor eine zwischen einer der Schließstellung des Ventils entsprechenden minimalen Spannung und einer einem vorgegebenen, maximalen Hub des Stößels, bei welchem das Ventil mit maximaler Durchflußmenge voll geöffnet ist, entsprechenden maximalen Spannung liegende Regelstrecke gebildet und gespeichert wird, und
- daß beim Anschließen einer Steuerspannungsquelle an den Mikroprozessor, deren zwischen 0 und 100 % einstellbare Spannungswerte durch den Mikroprozessor den Spannungswerten der in demselben gespeicherten Regelstecke proportional zugeordnet werden, der Schalter durch den Mikroprozessor in zeitlichen Abständen geschlossen und nach Zurücklegung des maximalen Hubs durch den Stößel wieder geöffnet wird, wobei der Abstand zwischen je zwei Schließvorgängen für den Schalter in Abhängigkeit von dem Prozentwert der an der Steuerspannungsquelle vorgegebenen Steuerspannung eingestellt wird.

Bei diesem Verfahren wird von der Erkenntnis ausgegangen, daß der maximal mögliche Hub des Arbeitskolbens bekannter Dehnkörper größer als der Weg ist, den der Stößel eines Ventils zwischen seiner Schließstellung einerseits und seiner Offenstellung andererseits zurücklegt. Die Länge dieses Weges des Stößels ist bekannt. Sie wird hier für die Hubbewegung des Arbeitskolbens des jeweiligen Dehnkörpers als maximaler Hub vorgegeben. Die maximale, von der Meßeinrichtung gelieferte Spannung entspricht diesem maximalen Hub des Arbeitskolbens des Dehnkörpers und damit dem Weg des Stößels des Ventils zwischen seinen beiden Endstellungen. Das Ventil kann die im Mikroprozessor gespeicherte Regelstrecke mittels einer an denselben angelegten Steuerspannung gezielt in jede zwischen den beiden Endstellungen liegende Position gebracht werden. Mit dem Wort "Mikroprozessor" soll jede intelligente elektronische Schaltung mit Speicherfunktion erfaßt sein. Solche Schaltungen werden beispielsweise auch als "Mikrocontroler" bezeichnet. Wenn das Ventil voll geöffnet sein soll, damit die maximal mögliche Durchflußmenge eines Mediums fließen kann, dann wird dem Mikroprozessor die maximale Steuerspannung zugeführt, welche der maximalen Spannung der Regelstrecke entspricht. Soll nur die Hälfte der maximal möglichen Durchflußmenge fließen, dann beträgt die Steuerspannung nur 50 % ihres Maximalwerts. Das gilt analog für jeden anderen prozentualen Wert von Steuerspannung und Durchflußmenge.

Die jeweilige Durchflußmenge des strömenden Mediums wird nach Maßgabe der vorgegebenen Steuerspannung vom Mikroprozessor durch Betätigung des Schalters eingestellt. Wenn beispielsweise eine Durchflußmenge von 50 % des Mediums strömen soll, dann wird die Steuerspannung auf 50 % eingestellt. Der zeitliche Abstand zwischen zwei Schließvorgängen entspricht dann dem Doppelten der Zeit, die zwischen dem Schließen des Schalters und - nach Zurücklegung des maximalen Hubs - dem Wiedererreichen der Ausgangsstellung des Stößels vergeht. Bei einer Durchflußmenge von 25 % entspricht der zeitliche Abstand zwischen zwei Schließvorgängen dem Vierfachen der angegebenen Zeit.

Durch die Begrenzung des Hubes des vom Dehnkörper bewegten Arbeitskolbens kann außerdem der Energieaufwand für die Einstellung eines Ventils wesentlich verringert werden. Wenn der Arbeitskolben des Dehnkörpers seinen eingestellten maximalen Hub ausgeführt hat, bei dem das zu betätigende Ventil voll geöffnet ist, wird die Stromzufuhr an den Widerstand unterbrochen. Es findet dann, bis auf einen Ruhestrom für die Schaltungsanordnung, kein Energieverbrauch mehr statt. Neben dem verminderten Energieaufwand ergibt sich bei Einsatz dieser Schaltungsanordnung auch eine wesentlich niedrigere Erwärmung des Dehnkörpers. Das führt nicht nur zu einer erhöhten Lebensdauer desselben, sondern insgesamt auch zu einer schnelleren Reaktion der ganzen Anordnung. Wenn ein Ventil beispielsweise geschlossen werden soll, wird die Stromzufuhr an den Widerstand unterbrochen. Der Stößel des Ventils gelangt dann sehr schnell in die Schließstellung, da erstens der Arbeitskolben des Dehnkörpers nur einen durch die Hubbegrenzung bedingten kurzen Weg zurücklegen muß und weil zweitens der Dehnkörper wegen seiner geringeren Erwärmung schnell abkühlt.

Das Verfahren nach der Erfindung wird anhand der Zeichnungen als Ausführungsbeispiel erläutert.

Es zeigen:
Fig. 1 eine Schaltungsanordnung zur Durchführung des Verfahrens nach der Erfindung als Bockschaltbild.

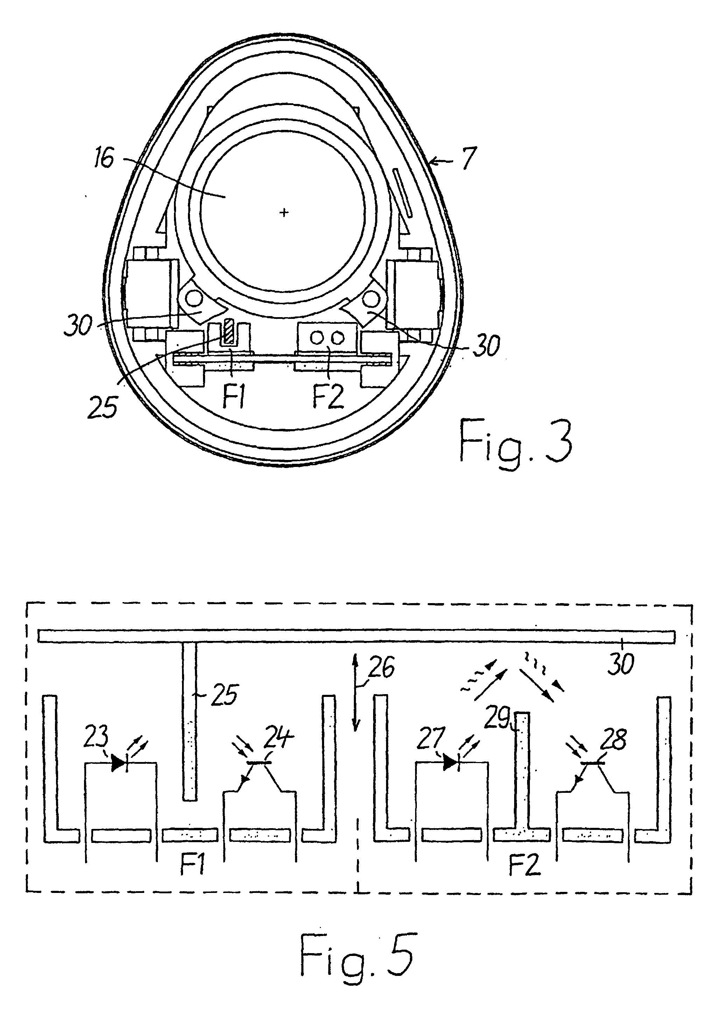

Fig. 2 und 3 eine mit dem Verfahren arbeitende Anordnung im Schnitt und als Draufsicht in schematischer Darstellung.
Fig. 4 zwei Zeitdiagramme.
Fig. 5 eine bei dem Verfahren einsetzbare opto/elektrische Einheit.

Zentrales Element des Verfahrens ist ein intilligentes elektronisches Schaltungsteil mit Speicherfunktion, ein Mikroprozessor 1. Er wird aus einer Spannungsquelle 2, die beispielsweise eine Wechselspannung von 24 V liefert, über ein Netzteil 3 gespeist, an dessen Ausgang beispielweise 5 V Gleichspannung zur Verfügung stehen. An den Mikroprozessor 1 sind außerdem eine Meßeinrichtung 4, eine Steuerspannungsquelle 5 und ein Schalter 6 angeschlossen. im Mikroprozessor 1 ist eine zwischen zwei Spannungswerten liegende Regelstrecke gespeichert, deren Aufnahme bzw. Entstehung weiter unten geschildert wird.

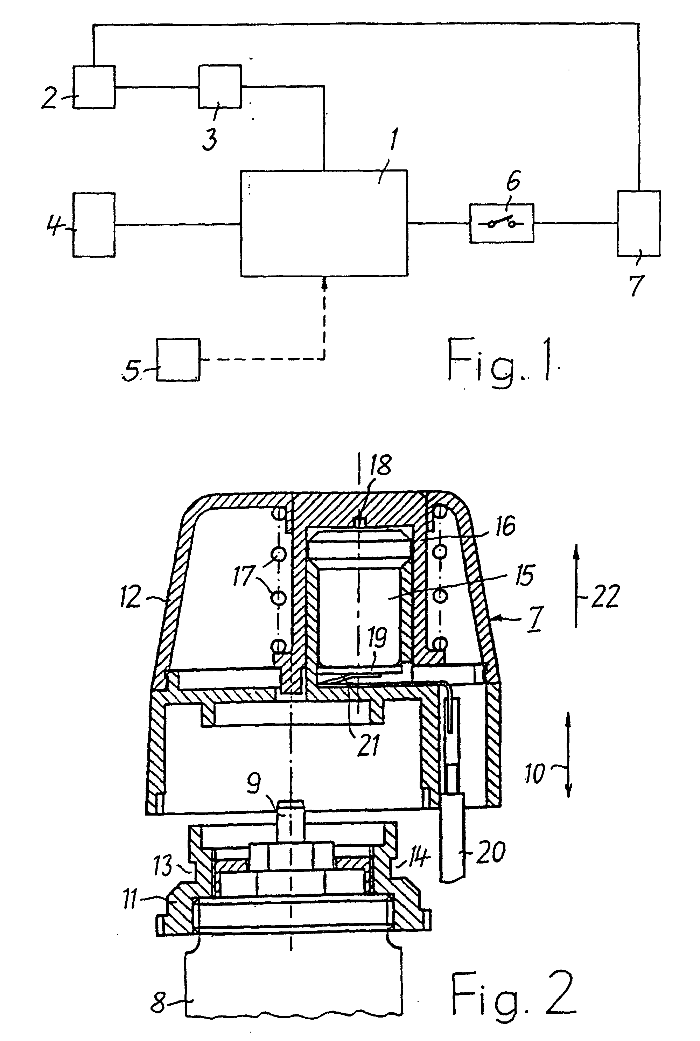

Mit dem Verfahren kann eine Vorrichtung 7 gesteuert werden, wie sie prinzipiell aus Fig. 2 hervorgeht. Die Vorrichtung 7 wird auf ein nur schematisch angedeutetes Ventil 8 aufgesetzt. Das Ventil 8 hat einen Stößel 9, der unter der Wirkung einer der Einfachheit halber nicht mit dargestellten Ventilfeder steht und in Richtung des Doppelpfeiles 10 zwischen einer Offenstellung und einer Schließstellung verstellbar ist. Der Stutzen des Ventils 8 ist beispielsweise mit einem Gewinde ausgerüstet, auf welches ein Halter 11 aufgeschraubt werden kann. Der beispielsweise aus Kunststoff bestehende Halter 11 dient zur Festlegung eines Gehäuses 12 der Vorrichtung 7 am Ventil 8. Dazu können im Gehäuse 12 beispielsweise federnd einrastende Haken angebracht sein, die in Montageposition in Ausnehmungen 13 und 14 des Halters 11 eingreifen. Das Gehäuse 12 kann aber auch auf andere Art und Weise am Ventil 8 befestigt werden, beispielsweise mittels einer Überwurfmutter.

Die Vorrichtung 7 selbst besteht - ohne Gehäuse 12 und Halter 11 - aus einem temperaturabhängigen Dehnkörper 15, einem topfartigen Stellglied 16 und einer Druckfeder 17. Der Dehnkörper 15 hat einen Arbeitskolben 18. Am Dehnkörper 15 ist außerdem ein als Heizelement dienender elektrischer Widerstand 19 angebracht, der über eine elektrische Leitung 20 und einen elektrischen Kontakt 21 an die Spannungsquelle 2 anschließbar ist.

Die im Mikroprozessor 1 zu speichernde Regelstrecke wird beispielsweise wie folgt gebildet und gespeichert:

Der maximale Hub des Arbeitskolbens 18 des Dehnkörpers 15 wird vorgegeben. Er entspricht dem maximalen Hub des Stößels 9, also dessen Weg zwischen der Schließstellung und der Offenstellung des Ventils 8. Dieser der maximalen Durchflußmenge eines Mediums entsprechende maximale Hub soll beispielsweise 3 mm betragen. Die Bewegung des Arbeitskolbens 18 wird von der Meßeinrichtung 4 überwacht, die dazu im dargestellten Ausführungsbeispiel mit dem Stellglied 16 gekoppelt ist. Am Ausgang der Meßeinrichtung 4 liegt eine elektrische Spannung an, die von der Position des Stellglieds 16 abhängt und sich bei einer Bewegung desselben ändert.

Sobald der Schalter 6 geschlossen ist, wird der Widerstand 19 erwärmt. Der Dehnkörper 15 dehnt sich aus, wodurch sein Arbeitskolben 18 aus demselben herausgedrückt wird. Er nimmt das Stellglied 16 in Richtung des Pfeiles 22 mit. Dadurch wird die Druckfeder 17 zusammengedrückt. Der Stößel 9 wird entlastet, so daß das Ventil 8 durch seine Ventilfeder geöffnet wird. Wenn der Arbeitskolben 18 des Dehnkörpers 15 seinen maximalen, vorgegebenen Hub zurückgelegt hat, wird die Stromzufuhr an den Widerstand 19 abgeschaltet. Die zu diesem Zeitpunkt von der Meßeinrichtung 4 gelieferte Spannung ist die maximal mögliche Spannung für den vorgegebenen Hub des Arbeitskolbens 18. Dieser Spannungswert wird vom Mikroprozessor 1 als Maximalwert gespeichert.

Wenn der Arbeitskolben 18 des Dehnkörpers 15 seinen maximalen Hub durchgeführt hat, wird der Schalter 6 durch den Mikroprozessor 1 geöffnet. Dadurch wird der Widerstand 19 von der Spannungsquelle 2 getrennt. Der Dehnkörper 15 kühlt ab und Arbeitskolben 18 sowie Stellglied 16 gehen in ihre Ausgangsposition zurück. Diese ist erreicht, wenn das Ventil 8 sich wieder in seiner Schließstellung befindet. Die von der Meßeinrichtung 4 gelieferte Spannung ändert sich dann nicht mehr, sondern bleibt auf dem in dieser Position gemessenen Wert stehen. Dieser Spannungswert wird vom Mikroprozessor 1 als Minimalwert gespeichert.

Zwischen dem oben erläuterten, einer Hubbegrenzung des Stößels 9 entsprechenden Maximalwert der von der Meßeinrichtung 4 gelieferten Spannung und ihrem Minimalwert wird vom Mikroprozessor 1 eine unterschiedlichen Spannungswerten entsprechende Regelstrecke gebildet und gespeichert. Mittels der Regelstrecke kann einerseits die Position des Stößels 9 des Ventils 8 zwischen dessen Schließstellung und Offenstellung durch den Mikroprozessor 1 vorgegeben werden. Andererseits ist es möglich, die Durchflußmenge des Mediums unter Verwendung der Hubbegrenzung und durch gezielte Betätigung des den Widerstand 19 ein- und ausschaltenden Schalters 6 durch den Mikroprozessor 1 sehr genau einzustellen.

Zur Aktivierung der Regelstrecke kann die Steuerspannungsquelle 5 verwendet werden, die eine zwischen 0 und 100 % liegende Steuerspannung zur Verfügung stellen kann. Handelsübliche Steuerspannungsquellen liefern beispielsweise eine zwischen 0 V und 10 V liegende Gleichspannung. Die Steuerspannung wird vom Mikroprozessor 1 nach Anschluß der Steuerspannungsquelle 5 den Spannungswerten der Regelstrecke proportional zugeordnet. Den 10 V (100%) der Steuerspannungsquelle 5 entspricht also der Maximalwert der Regelstrecke, während die O V dem Minimalwert derselben zugeordnet sein können.

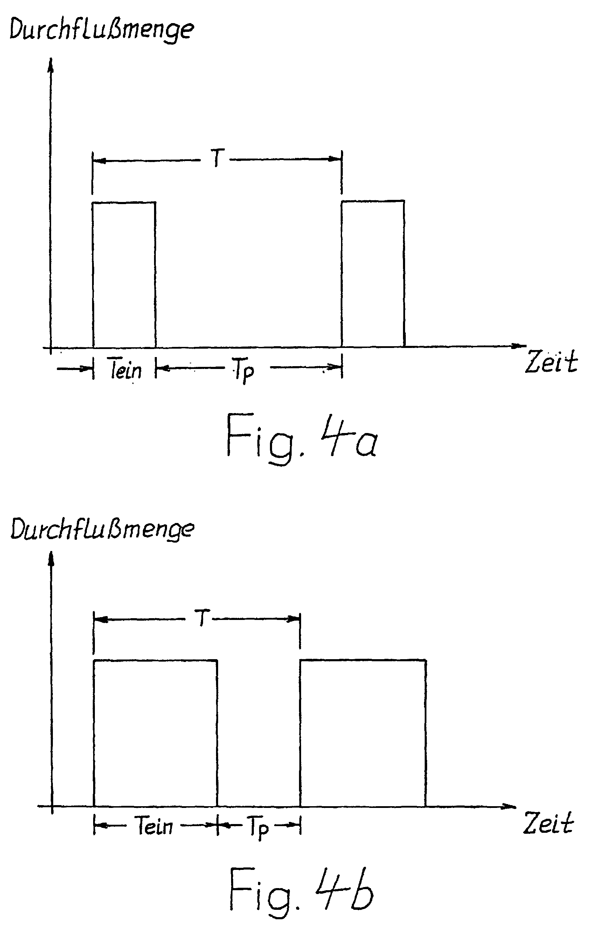

Zur Einstellung einer bestimmten prozentualen Durchflußmenge am Ventil 8 wird - unabhängig von der Durchflußmenge - zunächst in jedem Fall der Schalter 6 durch den Mikroprozessor 1 geschlossen. Durch den dann Wärme erzeugenden Widerstand 19 dehnt sich der Dehnkörper 15 aus, bis sein Arbeitskolben 18 seine der Hubbegrenzung entsprechende Position erreicht hat. In dieser Position wird der Schalter 6 geöffnet. Der Dehnkörper 15 kühlt ab und der Arbeitskolben 18 geht einschließlich Stellglied 16 in seine Ausgangsposition zurück. Die Zeit, die zwischen dem Schließen des Schalters 6 und einer damit verbundenen Bewegung des Arbeitskolbens 18 sowie dem Moment liegt, in dem derselbe seine Ausgangsposition wieder erreicht hat, wird vom Mikroprozessor 1 registriert und als Einschaltzeit Tein gespeichert (Fig. 4). Die Vorgabe bzw. Einstellung der prozentualen Durchflußmenge hängt von der Einschaltzeit Tein und der prozentualen Steuerspannung ab. Der zeitliche Abstand T zwischen zwei Schließvorgängen für den Schalter 6 setzt sich aus der Einschaltzeit Tein und einer Pausenzeit Tp zusammen. Dabei entspricht die Einschaltzeit Tein in Prozent vom zeitlichen Abstand T dem an der Steuerspannungsquelle 5 vorgegebenen Prozentwert der Steuerspannung.

Wenn die Durchflußmenge beispielsweise 25 % von der maximalen Durchflußmenge betragen soll, dann wird an der Steuerspannungsquelle 5 eine Spannung von 2,5 V vorgegeben. Da die vom Mikroprozessor 1 registrierte Einschaltzeit Tein in diesem Fall 25 % des zeitlichen Abstands T zwischen zwei Schließvorgängen des Schalters 6 beträgt, ergibt sich für den zeitlichen Abstand T eine Teit von 4 x Tein. Die verbleibenden 75 % der Zeit entsprechen der Pausenzeit Tp. Ein entsprechendes Zeitdiagramm geht aus Fig. 4a hervor.

Bei einer Durchflußmenge von 60 % beträgt die Einschaltzeit Tein 60 % des zeitlichen Abstands T zwischen zwei Schließvorgängen. Für den Abstand T ergibt sich damit eine Zeit von 1,66 x Tein. Die Pausenzeit Tp ist 40 % des zeitlichen Abstandes T. Fig. 4b zeigt ein entsprechendes Zeitdiagramm.

Die beschriebene Einstellung der prozentualen Durchflußmenge ist sinnvoll für den Bereich von 10 % bis 90 % der maximalen Durchflußmenge. Für die darunter und darüber liegenden Bereiche sind zusätzliche geeignete Maßnahmen besser, bei denen aber stets die durch die im Mikroprozesor 1 gespeicherte Regelstrecke gegebene Möglichkeit der Hubbegrenzung für den Arbeitskolben 18 bzw. den Stößel 9 ausgenutzt wird. So kann beispielsweise bei kleineren Durchflußmengen eine kürzere Hubbegrenzung eingestellt werden. Bei über 90 % liegenden Durchflußmengen kann die Betätigung des Schalters 6 von der Hubbegrenzung abgeleitet werden , ohne daß der Arbeitskolben 18 des Dehnkörpers 15 in seine Ausgangsstellung zurückgeht.

Die Steuerspannungsquelle 5 kann beispielsweise zentral in einem Heizkreisverteiler angeordnet sein. Die Steuerspannung kann von Hand oder automatisch, beispielsweise durch einen Raumthermostat, eingestellt werden.

Als Schalter 6 eignet sich beispielsweise ein Triac. Zu seiner Betätigung ist der Einsatz einer Sonde sinnvoll, welche jeweils den Nulldurchgang der speisenden Wechselspannung feststellt und sicherstellt, daß der Triac im Nulldurchgang geschaltet wird.

Als Meßeinrichtung 4 kann gemäß Fig. 5 vorzugsweise eine gestrichelt umrandete opto/elektrische Einheit mit zwei Fotostrecken F1 und F2 verwendet werden. Teile dieser Einheit können mit dem Stellglied 16 der Vorrichtung 7 verbunden sein. Andere Teile derselben können an deren Gehäuse 12 angebracht sein.

Die Fotostrecke F1 weist einen optischen Sender 23 und einen optischen Empfänger 24 auf. Der Sender 23 kann eine Leuchtdiode sein, während es sich beim Empfänger 24 um einen Phototransistor handeln kann. Beide Teile sind feststehend mit dem Gehäuse 12 der Vorrichtung 7 verbunden. In den Bereich zwischen Sender 23 und Empfänger 24 ragt ein Schwert 25 hinein, doß am Stellglied 16 angebracht und in Richtung des Doppelpfeils 26 bewegbar ist. Die Lichtstrecke zwischen Sender 23 und Empfänger 24 ist unterbrochen, wenn das Schwert 25 sich zwischen beiden Teilen befindet.

Die Fotostrecke F2 besteht aus einem optischen Sender 27 (Leuchtdiode) und einem optischen Empfänger 28 (Phototransistor), zwischen denen eine lichtundurchlässige Barriere 29 angebracht ist. Diese Teile sind wieder feststehend mit dem Gehäuse 12 der Vorrichtung 7 verbunden. Zur Fotostrecke F2 gehört auch ein Reflektor 30, der ebenso wie das Schwert 25 mit dem Stellglied 16 verbunden und damit in Richtung des Doppelpfeils 26 bewegbar ist. Das Schwert 25 ist vorzugsweise am Reflektor 30 angebracht. Das vom Sender 27 ausgesandte Licht wird vom Reflektor 30 reflektiert und fällt dann auf den Empfänger 28.

Die Anordnung nach Fig. 5 arbeitet wie folgt:

Das Schwert 25 befindet sich in der Ausgangsstellung zwischen dem Sender 23 und dem Empfänger 24. Der Dehnkörper 15 dehnt sich - wie bereits erwähnt - bei Einschaltung der Spannungsquelle 2 aus. Das dadurch bewegte Stellglied 16 nimmt den Reflektor 30 und damit auch das Schwert 25 mit. Wenn das Schwert 25 dabei aus dem Bereich von Sender 23 und Empfänger 24 herausgelangt, empfängt der Empfänger 24 deutlich mehr Licht. Er erzeugt dadurch an seinen Anschlüssen eine deutlich höhere, am Mikroprozessor 1 anliegende Spannung. Dadurch erkennt der Mikroprozessor 1, daß der Arbeitskolben 18 seinen maximalen Hub ausgeführt hat. Er öffnet den Schalter 6, so daß der Widerstand 19 von der Spannungsquelle 2 abgetrennt wird. Gleichzeitig wird die zu diesem Zeitpunkt am Empfänger 28 der Fotostrecke F2 anstehende Spannung als Maximalwert der vom Mikroprozessor 1 zu bildenden Regelstrecke in demselben abgespeichert.

Beim jetzt folgenden Abkühlen des Dehnkörpers 15 wird das Stellglied 16 in seine Ausgangsstellung zurückbewegt. Dabei wird auch der Reflektor 30 mitgenommen, der näher an Sender 27 und Empfänger 28 der Fotostrecke F2 herangelangt. Die sich dabei ändernde Spannung am Ausgang des Empfängers 28 wird vom Mikroprozessor 1 kontrolliert. Wenn diese Spannung sich nicht mehr ändert, hat das Stellglied 16 seine Ausgangsposition erreicht. Sie entspricht der Schließstellung des Ventils 8. Die dabei am Ausgang des Empfängers 28 anstehende Spannung wird als Minimalwert der Regelstrecke im Mikroprozessor 1 gespeichert.

Maximalwert und Minimalwert der am Ausgang des Empfängers 28 anstehenden Spannung werden durch eine geeignete (inverse) Schaltung betragsmäßig also solche gebildet, obwohl die Intensität des auf den Empfänger 28 fallenden Lichts und damit die Höhe seiner Ausgangsspannung mit abnehmender Entfernung des Reflektors 30 zunehmen.

Die geschilderte Funktionsweise des Verfahrens mit einer Schaltungsanordnung nach Fig. 1, insbesondere in Verbindung mit Fig. 5, gilt jedesmal, wenn eine entsprechend ausgerüstete Vorrichtung 7 auf ein Ventil 8 aufgesetzt und an die Spannungsquelle 2 angeschlossen wird. Der Aufbau und die Charakteristik des jeweiligen Ventils sind dabei nicht von Bedeutung. Die Vorrichtung 7 lernt mit dieser Schaltungsanordnung jeweils das Ventil kennen und der Mikroprozessor 1 bildet eine für das jeweilige Ventil individuelle Regelstrecke.

Zur Berücksichtigung von eventuellen temperaturbedingten Änderungen und Schmutzablagerungen an bzw. in den Fotostrecken F1 und F2 kann der geschilderte Kalibriervorgang jederzeit wiederholt werden. Der Mikroprozessor 1 bildet dann gegebenenfalls eine neue Regelstrecke.

## Patentansprüche

1. Verfahren zur Einstellung eines Ventils, das einen unter der Wirkung einer Ventilfeder stehenden und zwischen zwei Endstellungen in axialer Richtung verstellbaren Stößel aufweist, wobei zur Verstellung des Stößels ein mit einem in seiner Achsrichtung bewegbaren Arbeitskolben ausgerüsteter, temperaturabhängiger Dehnkörper am Ventil befestigt ist, der durch einen an eine Spannungsquelle anschließbaren, elektrischen Widerstand beheizbar ist und dem ein an der Stirnseite des Stößels anliegendes Stellglied zugeordnet ist, auf welches eine Druckfeder einwirkt, welche das Ventil bei nicht beheiztem Widerstand entgegen der Wirkung der Ventilfeder geschlossen hält und welche bei beheiztem, sich ausdehnendem Dehnkörper durch das dabei von demselben bewegte Stellglied zusammengedrückt wird, so daß das Ventil durch die Ventilfeder geöffnet wird, **dadurch gekennzeichnet,**
- **daß** zwischen dem Widerstand (19) und der Spannungsquelle (2) ein durch einen Mikroprozessor (1) zu betätigender, elektrischer Schalter (6) angeordnet wird,
- **daß** an den Mikroprozessor (1) eine mit dem Stellglied (16) gekoppelte Meßeinrichtung (4) angeschlossen wird, die von der Position des Stellgliedes (16) abhängige elektrische Spannungswerte an den Mikroprozessor (1) liefert, aus denen vom Mikroprozessor (1) eine zwischen einer der Schließstellung des Ventils (8) entsprechenden minimalen Spannung und einer einem vorgegebenen, maximalen Hub des Stößels (9), bei welchem das Ventil (8) mit maximaler Durchflußmenge voll geöffnet ist, entsprechenden maximalen Spannung liegende Regelstrecke gebildet und gespeichert wird, und
- **daß** beim Anschließen einer Steuerspannungsquelle (5) an den Mikroprozessor (1), deren zwischen 0 und 100 % einstellbare Steuerspannung durch den Mikroprozessor (1) den Spannungswerten der in demselben gespeicherten Regelstrecke proportional zugeordnet werden, der Schalter (6) durch den Mikroprozessor (1) in zeitlichen Abständen geschlossen und nach Zurücklegung des maximalen Hubs durch den Stößel (9) wieder geöffnet wird, wobei der Abstand zwischen je zwei Schließvorgängen für den Schalter (6) in Abhängigkeit von dem Prozentwert der an der Steuerspannungsquelle (5) vorgegebenen Steuerspannung eingestellt wird.

2. Verfahren nach Anspruch 1, **dadurch gekennzeichnet,**
- **daß** nach dem Schließen des Schalters (6) als Einschaltzeit (Tein) die Zeit vom Mikroprozessor (1) gemessen und gespeichert wird, die der Stößel (9) benötigt, um seinen maximalen Hub auszuführen und nach dem Öffnen des Schalters (6) in seine Ausgangsstellung zurückzugehen, und
- **daß** für eine Durchflußmenge, die zwischen 10 % und 90 % der maximalen Durchflußmenge liegt, der zeitliche Abstand (T) zwischen zwei Schließvorgängen für den Schalter (6) so bemessen wird, daß die Einschaltzeit (Tein) in Prozent vom zeitlichen Abstand (T) dem Prozentwert der an der Steuerspannungsquelle (5) vorgegebenen Steuerspannung entspricht.

3. Verfahren nach Anspruch 1 oder 2, **dadurch gekennzeichnet, daß** als Meßeinrichtung (4) eine opto/elektrische Einheit verwendet wird.

4. Verfahren nach Anspruch 3, **dadurch gekennzeichnet,**
- **daß** eine opto/elektrische Einheit mit zwei Fotostrecken (F1,F2) verwendet wird, von denen jede einen optischen Sender (23,27) und einen optischen Empfänger (24,28) hat,
- **daß** zwischen Sender (23) und Empfänger (24) der einen Fotostrecke (F1) ein mit dem Stellglied (16) verbundenes Schwert (25) bewegbar angeordnet ist und
- **daß** das vom Sender (27) der anderen Fotostrecke (F2) ausgehendes Licht dem Empfänger (28) derselben über einen Reflektor (30) zugeführt wird, der an das Stellglied (16) gekoppelt ist und dessen Position relativ zu den feststehenden Teilen Sender (27) und Empfänger (28) veränderbar ist.

## Claims

1. A process for adjusting a valve that provides a tappet actuated by a valve spring and adjustable axially between two end positions, wherein for moving the tappet a temperature-sensitive extending unit equipped with a working piston that is movable in its axial direction is attached to the valve that is heatable by means of an electric resistor that is connectable to a voltage source and to which a positioning element is arranged that contacts the face of the tappet that is actuated by a pressure spring that holds the valve closed contrary to the action of the valve spring when the resistor is unheated and that is pressed together when the extending unit is heated by means of the positioning element, which is moved by the same thereby, such that the valve is opened by the valve spring, **characterized in that**
- an electric switching mechanism (6) for activation by a microprocessor (1) is arranged between the resistor (19) and the voltage source (2),
- a measuring device (4) linked with the positioning element (16) is connected to the microprocessor (1) that supplies electric voltage values based on the position of the positioning element (16) to the microprocessor (1), from which a control path lying between a minimum voltage corresponding to the closed position of the valve (8) and a maximum voltage that corresponds to a predefined maximum stroke of the tappet (9), at which the valve (8) is fully open with maximum flow volume, is generated and stored by the microprocessor (1), and
- when connecting a control voltage source (5) to the microprocessor (1), the control voltage adjustable between 0 and 100% by means of the microprocessor (1) of which is assigned proportionally to the voltage values of the control path stored in the same, the switching mechanism (6) is closed by means of the microprocessor (1) at time intervals and reopened by the tappet (9) after the maximum stroke has been covered, wherein the interval between each of the two closing operations is adjusted for the switching mechanism (6) based on the percentage value of the control voltage provided at the control voltage source (5).

2. A process according to claim 1, **characterized in that**
- after closing the switching mechanism (6) the time is measured and stored by the microprocessor (1) as the switch-on time (Tein) needed by the tappet (9) to carry out its maximum stroke and retum to the start position after the switching mechanism (6) opens and
- for a flow volume that lies between 10% and 90% of the maximum flow volume, the time interval (T) between the two closing operations is measured for the switching mechanism (6) such that the percentage switch-on time (Tein) of the time interval (T) is equivalent to the percentage of the control voltage provided at the control voltage source (5).

3. A process according to claims 1 or 2, **characterized in that** an optical/electrical unit is employed as a measuring device (4).

4. A process according to claim 3, **characterized in that**
- an optical/electrical unit with two photo-optic sections (F1, F2) is used, of which each has an optical transmitter (23, 27) and an optical receiver (24, 28),
- that a rod (25) connected to the positioning element (16) is arranged movable between the transmitter (23) and the receiver (24) of the one photo-optic section (F1) and
- the light emitted from the transmitter (27) of the other photo-optic section (F2) is delivered to the receiver (28) of the same by means of a reflector (30) that is linked to the positioning element (16) and the position of which is changeable relative to the permanently positioned parts transmitter (27) and receiver (28).

## Revendications

1. L'invention concerne un procédé de réglage d'une vanne, qui présente un poussoir sous l'action d'un ressort de vanne et réglable en sens axial entre deux positions finales ; un corps extensible sous l'influence de la température muni d'un piston mobile dans son sens axial étant fixé sur la vanne pour le réglage du poussoir, ce corps pouvant être chauffé par une résistance électrique que l'on peut relier à une source de tension et auquel est affecté un actionneur disposé à l'avant du poussoir, actionneur sur lequel agit un ressort de compression, qui maintient fermée la vanne contre l'effet du ressort de vanne en cas de résistance non chauffée et qui, en cas d'allongement du corps extensible chauffé, est comprimé par le même actionneur en mouvement, provoquant ainsi l'ouverture de la vanne par le ressort de vanne,
**caractérisé par le fait**
- **qu'**un contact électrique (6) commandé par un microprocesseur (1) est disposé entre la résistance (19) et la source de tension (2),
- **qu'**un appareil de mesure (4) couplé avec l'actionneur (16) est relié au microprocesseur (1), lequel appareil transmet des valeurs de tension électrique en fonction de la position de l'actionneur (16) au microprocesseur (1), sur la base desquelles est définie et enregistrée - par le microprocesseur (1) - une grandeur réglée comprise entre une tension minimale correspondant à la position de fermeture de la vanne (8) et une tension maximale correspondant à une course maximale prédéfinie du poussoir (9), à laquelle la vanne (8) est entièrement ouverte avec un débit maximal, et
- **qu'**à la fermeture d'une source de tension de commande (5) sur le microprocesseur (1), dont les valeurs de tension réglables entre 0 et 100 % sont affectées par le microprocesseur (1) proportionnellement aux valeurs de tension de la grandeur réglée enregistrée dans celui-ci, le contact (6) est fermé par le microprocesseur (1) par intervalles de temps et rouvert par le poussoir (9) une fois la course maximale parcourue ; l'intervalle entre deux fermetures du contact (6) étant réglé en fonction de la valeur en pourcentage de la tension de commande prédéfinie sur la source de tension de commande (5).

2. Procédé selon la revendication 1, **caractérisé par le fait**
- **qu'**à la fermeture du contact (6), le temps qu'il faut au poussoir (9) pour atteindre sa course maximale et retourner à sa position de départ après l'ouverture du contact (6), est mesuré et enregistré par le microprocesseur (1) comme temps de marche (Tm), et
- **que** pour un débit compris entre 10 et 90 % du débit maximal, l'intervalle de temps (T) entre deux fermetures pour le contact (6) est mesuré de sorte que le temps de marche (Tm) en pourcentage de l'intervalle de temps T corresponde à la valeur en pourcentage de la tension de commande prédéfinie sur la source de tension de commande (5).

3. Procédé selon la revendication 1 ou 2, **caractérisé par le fait qu'**une unité opto-électrique est utilisée comme appareil de mesure (4).

4. Procédé selon la revendication 3, **caractérisé par le fait**
- **qu'**une unité opto-électrique est utilisée avec deux barrières photo-électriques (F1, F2), chacune disposant d'un émetteur optique (23, 27) et d'un récepteur optique (24, 28),
- **qu'**entre l'émetteur (23) et le récepteur (24) de la première barrière photo-électrique (F1), est disposée une lame mobile (25) relié à l'actionneur (16) et
- **que** la lumière émise par l'émetteur (27) de l'autre barrière photo-électrique (F2) est dirigée vers le récepteur (28) de celle-ci par un réflecteur (30), qui est relié à l'actionneur (16) et dont la position peut être modifiée par rapport aux parties fixes : l'émetteur (27) et le récepteur (28).
